(19) Europäisches Patentamt
European Patent Office
Office européen des brevets

(11) **EP 1 910 776 B1**

(12) **EUROPÄISCHE PATENTSCHRIFT**

(45) Veröffentlichungstag und Bekanntmachung des Hinweises auf die Patenterteilung:
**22.04.2015 Patentblatt 2015/17**

(21) Anmeldenummer: **06777280.6**

(22) Anmeldetag: **08.06.2006**

(51) Int Cl.:
***G01C 19/56*** *(2012.01)*

(86) Internationale Anmeldenummer:
**PCT/EP2006/062988**

(87) Internationale Veröffentlichungsnummer:
**WO 2007/012518 (01.02.2007 Gazette 2007/05)**

(54) **DREHRATENSENSOR**

ROTATIONAL SPEED SENSOR

CAPTEUR DE VITESSE DE ROTATION

(84) Benannte Vertragsstaaten:
**DE ES FR GB IT**

(30) Priorität: **26.07.2005 DE 102005034698**

(43) Veröffentlichungstag der Anmeldung:
**16.04.2008 Patentblatt 2008/16**

(73) Patentinhaber: **ROBERT BOSCH GMBH
70442 Stuttgart (DE)**

(72) Erfinder: **STEINLECHNER, Siegbert
71229 Leonberg (DE)**

(56) Entgegenhaltungen:
**US-B1- 6 253 612**

**Beschreibung**

Technisches Gebiet:

Die Erfindung betrifft ein Verfahren zum Antrieb und zur gleichzeitigen Bestimmung der Auslenkung (x(t)) und/oder der Bewegungsgeschwindigkeit (v(t)) eines elektrostatisch anregbaren Schwingerelements, gemäß dem Oberbegriff des Anspruchs 1, sowie eine Schaltungsanordnung zur Durchführung des Verfahrens, gemäß dem Oberbegriff des Anspruchs 8.

Stand der Technik:

Mikromechanische Drehratensensoren werden heute beispielsweise in Kraftfahrzeugen als Geber für Fahrassistenzsysteme, wie etwa das Elektronische Stabilitätsprogramm, ESP, oder Wankneigungsausgleich eingesetzt. Sie messen mit Hilfe des Corioliäeffekts beispielsweise die Drehrate des Fahrzeugs um seine Hochachse (Gieren) oder um seine Längsachse (Rollen).

In mikromechanischen Drehratensensoren befinden sich ein oder mehrere Schwingerelemente, die mit Hilfe elektrostatischer Kräfte in periodische Schwingungen versetzt werden. Die Schwingerelemente umfassen jeweils eine innerhalb einer Ebene um eine Ruhelage schwingfähig angeordnete Masse m. Es ist auch bekannt, die Schwingerelemente anstelle mittels einer elektrostatischen Anregung beispielsweise elektrodynamisch oder piezoelektrisch anzuregen.

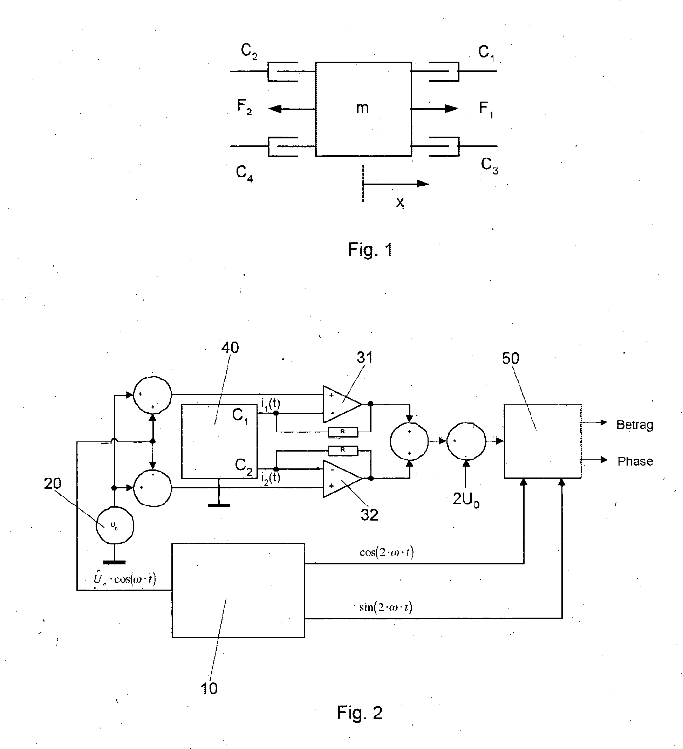

Im Folgenden wird der Vereinfachung halber nur eine schwingende Masse betrachtet. Mikromechanische Drehratensensoren weisen für die Anregung des Schwingerelements und für die Messung der Schwingerbewegung vier jeweils aus einem oder mehreren Kondensatoren bestehende Kondensatorgruppen auf, wie in Fig. 1 schematisch dargestellt. In Fig. 1 sind mechanische Federn und Dämpferelemente zur Vereinfachung nicht dargestellt. Die Ebene, in der das flache Schwingerelement liegt, sei die x-y-Ebene. Da die elektrostatischen Kräfte in Kondensatoren immer nur anziehend wirken, werden für den Antrieb zwei beidseitig des Schwingerelements angeordnete Kondensatorgruppen $C_1$ und $C_2$ benötigt. Die Kondensatorgruppe $C_1$ erzeugt Kräfte $F_1$ in positiver x-Richtung, die Kondensatorgruppe $C_2$ konkurrierend Kräfte $F_2$ in negativer x-Richtung. Die separaten Kondensatorgruppen $C_3$ und $C_4$ dienen zur Messung der Auslenkung x(t) und/oder der Bewegungsgeschwindigkeit v(t) des Schwingerelements, wodurch die Schwingfrequenz und die Schwingamplitude durch geeignete Maßnahmen auf die mechanische Resonanzfrequenz der Schwingungsbewegung, beziehungsweise auf eine feste, vorgegebene Amplitude eingestellt werden können. Typischerweise werden die Kondensatorgruppen $C_3$ und $C_4$ in einer Differenzmessung eingesetzt, beispielsweise um parasitäre Kapazitäten zu eliminieren.

Wird die in x-Richtung schwingende Masse m um die z-Achse gedreht, erfährt die Masse eine zusätzliche periodische Beschleunigung in y-Richtung, die der Drehrate proportional ist. Um diese Beschleunigung zu messen, sind spezielle Messvorrichtungen notwendig, beispielsweise eine an die Masse m elastisch angekoppelte zweite Masse, die in y-Richtung schwingen kann, sowie beispielsweise zwei zusätzliche Messkondensatorgruppen zur Messung der y-Schwingamplitude. Drehratensensoren mit derartigen Messvorrichtungen sind beispielsweise aus DE 102 37 410 A1 und aus DE 102 37 411 A1 bekannt. Die Erfassung von Auslenkungen oder Kräften in y-Richtung ist nicht Gegenstand der vorliegenden Patentanmeldung.

Nach dem Stand der Technik sind zur elektrostatischen Anregung und zur Messung von Auslenkung x(t) und/oder Bewegungsgeschwindigkeit v(t) des Schwingerelements vier Kondensatorgruppen $C_1$, $C_2$, $C_3$ und $C_4$ erforderlich, was einerseits einen hohen Herstellungsaufwand, und andererseits große Abmessungen heutiger Drehratensensoren bedeutet.

Offenbarung der Erfindung und deren Vorteile:

Die Nachteile des Standes der Technik werden bei einem erfindungsgemäßen Verfahren der eingangs genannten Gattung vermieden durch eine Bestimmung der Auslenkung und/oder der Bewegungsgeschwindigkeit des Schwingerelements anhand des bei der elektrostatischen Anregung fließenden Anregungsstromes.

Kern der Erfindung ist dabei das Erzeugen der Antriebskräfte $F_1$ und $F_2$ und das gleichzeitige Messen der Auslenkung x(t) und/oder der Schwingergeschwindigkeit v(t) nur unter Verwendung zweier Kondensatorgruppen $C_1$ und $C_2$

Die Erfindung beruht auf einer besonderen Ausgestaltung der an die Kondensatorgruppen $C_1$ und $C_2$ angelegten Anregungsspannungen $U_1(t)$ und $U_2(t)$, wobei gleichzeitig die Summe der in die Kondensatorgruppen $C_1$ und $C_2$ hinein fließende Ströme $i_1(t)$ und $i_2(t)$ ausgewertet wird.

Durch die Erfindung können gegenüber dem Stand der Technik die Kondensatorgruppen $C_3$ und $C_4$ eingespart werden, wodurch beispielsweise der Sensor verkleinert werden kann. Werden die durch $C_3$ und $C_4$ frei werdenden

Chipflächen des Sensors den Kondensatorgruppen $C_1$ und $C_2$ zugeschlagen, kann bei gleicher Chipfläche beispielsweise die notwendige Anregungsspannung verkleinert werden. Somit kann beispielsweise auf Ladungspumpen zur Erhöhung der Anregungsspannung über die zur Verfügung stehende Betriebsspannung hinaus verzichtet werden.

Kurzbeschreibung der Zeichnung, in der zeigen:

Figur 1     eine schematische Darstellung des Aufbaus eines mikromechanischen Drehratensensors nach dem Stand der Technik, sowie

Figur 2     eine erfindungsgemäße Schaltungsanordnung zum gleichzeitigen Antrieb und zur gleichzeitigen Geschwindigkeitsmessung eines Drehratensensors.

Wege zur Ausführung der Erfindung:

Zur Anregung eines zu einer Schwingungsbewegung anregbaren Schwingerelements mit der Masse m dienen zwei beidseitig des Schwingerelements in der Ebene der Schwingungsbewegung angeordneten Kondensatorgruppen $C_1$ und $C_2$. Die Kondensatorgruppen $C_1$ und $C_2$ bestehen jeweils aus mindestens einem Kondensator. Der Begriff Kondensator umfasst dabei jegliche Art kapazitiver Elemente, bei denen durch Anlegen einer Spannung eine elektrostatische Kraft zwischen den eine Kapazität bildenden Ladungsträgern erzeugt wird, und bei denen eine Veränderung des Abstandes zwischen den Ladungsträgern zueinander eine Änderung der Kapazität nach sich zieht.

Die beiden dem Antrieb des Schwingerelements dienenden Kondensatorgruppen $C_1$ und $C_2$ werden mit den Anregungsspannungen $U_1(t)$ und $U_2(t)$ beaufschlagt. Diese beiden Anregungsspannungen besitzen je einen Gleichanteil $U_0$, der durch eine kosinusförmige Wechselspannung $U_a(t)$ mit unterschiedlichem Vorzeichen überlagert wird:

$$U_1(t) = U_0 + U_a(t)$$

$$U_2(t) = U_0 - U_a(t)$$

$$U_a(t) = \hat{U}_a \cdot \cos(\omega \cdot t)$$

In einem Kondensator gilt ein quadratischer Zusammenhang zwischen angelegter Spannung und ausgeübter elektrostatischer Kraft. Für die resultierende, auf die Masse m des Schwingerelements einwirkende Kraft F(t), die sich aus der Differenz der in x-Richtung und in negativer x-Richtung wirkenden Kräfte $F_1(t)$ und $F_2(t)$ berechnet, gilt deshalb:

$$F(t) = F_1(t) - F_2(t)$$

$$F(t) \sim \left[ U_1^2(t) - U_2^2(t) \right] = 4 \cdot U_0 \cdot U_a(t)$$

Es ergibt sich ein linearer Zusammenhang zwischen $U_a(t)$ und der ausgeübten Kraft F(t). Da $U_a(t)$ eine harmonische Schwingung ist, wird auch die von der Masse m zurückgelegte Auslenkung x(t) sowie die Bewegungsgeschwindigkeit v(t) im eingeschwungenen Zustand eine harmonische Schwingung darstellen gemäß

$$x(t) = \hat{x} \cdot \cos(\omega \cdot t + \varphi)$$

$$v(t) = -\hat{x} \cdot \omega \cdot \sin(\omega \cdot t + \varphi)$$

Die maximale Auslenkung $\hat{x}$ und die Phase $\varphi$ sind von der Höhe der Anregungsspannungen, der Anregungsfrequenz und den Schwingereigenschaften abhängig. Bei der Schwinger-Resonanzfrequenz gilt: $\varphi = -\pi/2$, in diesem Fall ist v(t) in Phase mit $U_a(t)$.

Für die Kapazitäten $C_1(t)$ und $C_2(t)$ der Kondensatorgruppen $C_1$ und $C_2$ gilt folgende lineare beziehungsweise gegebenenfalls linearisierte Abhängigkeit:

$$C_1(t) = C_0 + k_c \cdot x(t)$$

$$C_2(t) = C_0 - k_c \cdot x(t)$$

Hierbei ist $C_0$ die Grundkapazität bei Auslenkung x=0, $k_c$ ist eine durch die Kondensatorgeometrie bedingte Konstante. Für die momentanen Ladungen auf den Kondensatoren gilt:

$$Q_1(t) = C_1(t) \cdot U_1(t)$$

$$Q_2(t) = C_2(t) \cdot U_2(t)$$

Damit lassen sich die momentanen Anregungsströme $i_1(t)$ und $i_2(t)$, die in die beiden Kondensatoren hineinfließen, berechnen zu:

$$i_1(t) = \frac{dQ_1}{dt} = C_1(t) \cdot \frac{dU_1(t)}{dt} + U_1(t) \cdot \frac{dC_1(t)}{dt}$$

$$i_2(t) = \frac{dQ_2}{dt} = C_2(t) \cdot \frac{dU_2(t)}{dt} + U_2(t) \cdot \frac{dC_2(t)}{dt}$$

Wird die Summe der beiden Anregungsströme $i_1(t)$ und $i_2(t)$ gebildet, und diese in obige Beziehungen eingesetzt, so lässt sich folgender Zusammenhang erkennen:

$$\frac{i_1(t) + i_2(t)}{2 \cdot k_c \cdot \hat{U}_a} = -\omega \cdot \hat{x} \cdot \sin(2 \cdot \omega \cdot t + \varphi)$$

Beim Vergleich der Summe der beiden Anregungsströme $i_1(t)$ und $i_2(t)$ mit der Bewegungsgeschwindigkeit v(t) des Schwingerelements

$$v(t) = -\omega \cdot \hat{x} \cdot \sin(\omega \cdot t + \varphi)$$

ist zu erkennen, dass die Summe der beiden Anregungsströme $i_1(t)$ und $i_2(t)$ bis auf konstante Vorfaktoren dieselben Parameter Amplitude und Phase wie die Bewegungsgeschwindigkeit v(t) des Schwingerelements besitzt, jedoch die doppelte Frequenz.

Fig. 2 zeigt eine Schaltungsanordnung, mit der sich die gesuchten Parameter Amplitude und Phase der Anregungsströme $i_1(t)$ und $i_2(t)$ bestimmen lassen. Ein Signalgenerator 10 liefert das Signal $U_a(t)$ mit

$$U_a(t) = \hat{U}_a \cdot \cos(\omega \cdot t).$$

Eine vorzugsweise regelbare Gleichspannungsquelle 20 liefert das Signal $U_0$. Über Addier- bzw. Subtrahier-stufen werden die Anregungsspannungen

$$U_1(t) = U_0 + U_a(t)$$

und

$$U_2(t) = U_0 - U_a(t)$$

gebildet, die den nichtinvertierenden Eingängen zweier Operationsverstärker 31, 32 zugeführt werden. Die Operationsverstärker 31, 32 sind über je einen Widerstand R gegengekoppelt. Die invertierenden Eingänge der Operationsverstärker 31, 32 sind mit den Kondensatorgruppen $C_1$ und $C_2$ eines Drehratensensors 40 verbunden. In dem Drehratensensor 40 sind ein oder mehrere Schwingerelemente angeordnet, welche sich durch die an den Kondensatorgruppen $C_1$ und $C_2$ anliegenden Spannungen elektrostatisch in Schwingung versetzen lassen. Den Kondensatorgruppen $C_1$ und $C_2$ werden so die Anregungsspannungen $U_1(t)$ und $U_2(t)$ zum Antrieb der Schwingerelemente des Drehratensensors 40 zugeführt. Die Ausgangsspannungen der beiden Operationsverstärker 31, 32 ergeben sich zu $U_0 + R \cdot i_1(t)$ und $U_0 + R \cdot i_2$ ($t$) wodurch die Anregungsströme $i_1(t)$ und $i_2(t)$ bestimmt sind. Dann wird die Summe dieser beiden, die Anregungsströme beinhaltenden Ausgangsspannungen gebildet und der Offset 2. $U_0$ abgezogen. Von dem resultierenden Signal werden nun in einer Phasen- und Betragsmessvorrichtung 50 auf bekannte Weise Phase und Betrag ermittelt. Dazu werden der Phasen- und Betragsmessvorrichtung 50 ebenfalls von dem Signalgenerator 10 erzeugten, sinus- bzw. kosinusförmigen Referenzsignale $cos(2 \cdot \omega \cdot t)$ t) und $sin(2 \cdot \omega) \cdot t$ mit doppelter Anregungsfrequenz zugeführt.

Aus dem gemessenen Betrag kann nun die der maximalen Auslenkung entsprechende Schwingamplitude bestimmt werden, beispielsweise um diese durch Veränderung von $U_0$ oder $\hat{U}_a$ auf einen bestimmten Wert zu regeln. Aus der gemessenen Phase kann eine Regelgröße bestimmt werden, mit deren Hilfe die Antriebsfrequenz immer auf der mechanischen Resonanzfrequenz gehalten werden kann. Bei der Resonanz beträgt die geforderte Phase genau $-\pi/2$.

Gewerbliche Anwendbarkeit:

Die Erfindung ist insbesondere zur Herstellung von mikromechanischen Drehratensensoren, beispielsweise zur Verwendung in Verbindung mit Fahrassistenzsystemen, wie etwa ESP, Wankneigungsausgleich, Navigationsgeräten oder dergleichen gewerblich anwendbar.

**Patentansprüche**

1. Verfahren zum Antrieb und zur gleichzeitigen Bestimmung der Auslenkung (x(t)) und/oder der Bewegungsgeschwindigkeit (v(t)) eines elektrostatisch anregbaren Schwingerelements, **gekennzeichnet durch** eine Bestimmung der Auslenkung (x(t)) und/oder der Bewegungsgeschwindigkeit (v(t)) des Schwingerelements anhand der bei der elektrostatischen Anregung fließenden Anregungsströme ($i_1(t)$, $i_2(t)$).

2. Verfahren nach Anspruch 1, **dadurch gekennzeichnet,**
**dass** die elektrostatische Anregung mittels beidseitig des Schwingerelements in der Ebene der Schwingungsbewegung angeordneten Kondensatorgruppen ($C_1$, $C_2$) erfolgt, und die an die Kondensatorgruppen ($C_1$, $C_2$) angelegten Anregungsspannungen ($U_1(t)$, $U_2(t)$) besonders ausgestaltet sind.

3. Verfahren nach Anspruch 2, **dadurch gekennzeichnet,**
**dass** die an die beiden Kondensatorgruppen ($C_1$, $C_2$) angelegte Anregungsspannungen ($U_1(t)$, $U_2(t)$) je einen Gleichanteil ($U_0$), der durch eine kosinusförmige Wechselspannung ($U_a(t)$) mit unterschiedlichem Vorzeichen für die beiden Kondensatorgruppen ($C_1$, $C_2$) überlagert wird, besitzen.

4. Verfahren nach Anspruch 2 oder 3, **dadurch gekennzeichnet,**
**dass** die Summe ($i_1(t) + i_2(t)$) der in die Kondensatorgruppen ($C_1$, $C_2$) hinein fließende Anregungsströme ($i_1(t)$, $i_2(t)$) zur Bestimmung der Auslenkung (x(t)) und/oder der Bewegungsgeschwindigkeit (v(t)) ausgewertet wird.

5. Verfahren nach Anspruch 4, **dadurch gekennzeichnet,**
**dass** die Auslenkung und/oder Bewegungsgeschwindigkeit des Schwingerelements anhand der über die Summe ($i_1(t) + i_2(t)$) der Anregungsströme ($i_1(t)$, $i_2(t)$) bestimmbaren Kapazitätsänderung ($C_1(t)$, $C_2(t)$) der Kondensatorgruppen ($C_1$; $C_2$) berechnet wird.

6. Verfahren nach einem der vorhergehenden Ansprüche, **dadurch gekennzeichnet,**
**dass** das Schwingerelement zu einer Schwingungsbewegung in seiner Resonanzfrequenz angeregt wird.

7. Verfahren nach einem der vorhergehenden Ansprüche, **dadurch gekennzeichnet,**

**dass** die Bewegungsgeschwindigkeit v(t) direkt aus der Summe der Anregungsströme (i$_1$(t), i$_2$(t)) berechnet wird, wobei gilt

$$\frac{i_1(t) + i_2(t)}{2 \cdot k_c \cdot \hat{U}_a} = -\omega \cdot \hat{x} \cdot \sin(2 \cdot \omega \cdot t + \varphi)$$

und

$$v(t) = -\omega \cdot \hat{x} \cdot \sin(\omega \cdot t + \varphi),$$

wobei die Summe der Anregungsströme die doppelte Frequenz aufweist, als die Bewegungsgeschwindigkeit des Schwingerelements.

8. Schaltungsanordnung zur Durchführung des Verfahrens nach einem der Ansprüche 1 bis 7, umfassend einen Drehratensensor (40) mit mindestens einem zu einer Schwingungsbewegung anregbaren Schwingerelement, sowie Mittel (C$_1$, C$_2$) zur elektrostatischen Anregung des Schwingerelements, **gekennzeichnet durch** Mittel (31, 32, 50) zur Messung der bei der elektrostatischen Anregung des Schwingerelements fließenden Anregungsströme(i$_1$(t), i$_2$(t)), Mittel zur Bildung der Summe (i$_1$(t) + i$_2$(t)) der Anregungsströme (i$_1$(t)', i$_2$(t)), sowie Mittel (50) zur Berechnung der Bewegungsgeschwindigkeit (v(t) des Schwingerelements anhand der Summe (i$_1$(t) + i$_2$(t)) der Anregungsströme (i$_1$(t), i$_2$(t)).

9. Schaltungsanordnung nach Anspruch 8, **gekennzeichnet durch** Mittel zur Berechnung der kapazitiven Änderung der das Schwingerelement in Schwingung versetzenden Mittel (C$_1$, C$_2$) anhand der gemessenen Anregungsströme (i$_1$(t), i$_2$(t)) und der Anregungsspannungen (U$_1$(t), U$_2$(t)), sowie Mittel zur Berechnung der Auslenkung des Schwingerelements anhand der Kapazitätsänderung.

## Claims

1. Method for driving and for simultaneously determining the deflection (x(t)) and/or the rate of movement (v(t)) of an electrostatically excitable oscillator element, **characterized by** a determination of the deflection (x(t)) and/or of the rate of movement (v(t)) of the oscillator element with the aid of the excitation currents (i$_1$(t), i$_2$(t)) flowing during the electrostatic excitation.

2. Method according to Claim 1, **characterized in that** the electrostatic excitation is performed by means of capacitor groups (C$_1$, C$_2$) arranged on both sides of the oscillator element in the plane of the oscillation movement, and the excitation voltages (U$_1$(t), U$_2$(t)) applied to the capacitor groups (C$_1$, C$_2$) are particularly designed.

3. Method according to Claim 2, **characterized in that** the excitation voltages (U$_1$(t), U$_2$(t)) applied to the two capacitor groups (C$_1$, C$_2$) each have a direct component (U$_0$) on which there is superimposed a cosine AC voltage (U$_a$(t)) with a different algebraic sign for the two capacitor groups (C$_1$, C$_2$).

4. Method according to Claim 2 or 3, **characterized in that** the sum (i$_1$(t) + i$_2$(t)) of the excitation currents (i$_1$(t), i$_2$(t)) flowing into the capacitor groups (C$_1$, C$_2$) is evaluated in order to determine the deflection (x(t)) and/or the rate of movement (v(t)).

5. Method according to Claim 4, **characterized in that** the deflection and/or rate of movement of the oscillator element is calculated with the aid of the change in capacitance (C$_1$(t), C$_2$(t)) of the capacitor groups (C$_1$, C$_2$) that can be determined via the sum (i$_1$(t) + i$_2$(t)) of the excitation currents (i$_1$(t), i$_2$(t)).

6. Method according to one of the preceding claims, **characterized in that** the oscillator element is excited to an oscillation movement at its resonant frequency.

7. Method according to one of the preceding claims, **characterized in that** the rate of movement v(t) is calculated directly from the sum of the excitation currents ($i_1(t)$, $i_2(t)$), wherein it holds that

$$\frac{i_1(t) + i_2(t)}{2 \cdot k_c \cdot \hat{U}_a} = -\omega \cdot \hat{x} \cdot \sin(2 \cdot \omega \cdot t + \varphi)$$

and

$$\dot{v}(t) = -\omega \cdot \hat{x} \cdot \sin(\omega \cdot t + \varphi),$$

the sum of the excitation currents having twice the frequency of the rate of movement of the oscillator element.

8. Circuit arrangement for carrying out the method according to one of Claims 1 to 7, comprising a rotational speed sensor (40) with at least one oscillator element that can be excited to an oscillation movement, and means ($C_1$, $C_2$) for the electrostatic excitation of the oscillator element, **characterized by** means (31, 32, 50) for measuring the excitation currents ($i_1(t)$, $i_2(t)$) flowing during the electrostatic excitation of the oscillator element, means for forming the sum ($i_1(t) + i_2(t)$) of the excitation currents ($i_1(t)$, $i_2(t)$), and means (50) for calculating the rate of movement ($v(t)$) of the oscillator element with the aid of the sum ($i_1(t) + i_2(t)$) of the excitation currents ($i_1(t)$, $i_2(t)$).

9. Circuit arrangement according to Claim 8, **characterized by** means for calculating the capacitive change in the means ($C_1$, $C_2$), which cause the oscillator element to oscillate, with the aid of the measured excitation currents ($i_1(t)$, $i_2(t)$) and of the excitation voltages ($U_1(t)$, $U_2(t)$), and means for calculating the deflection of the oscillator element with the aid of the change in capacitance.

## Revendications

1. Procédé d'entraînement et simultanément de détermination de la déviation ($x(t)$) et/ou de la vitesse de déplacement ($v(t)$) d'un élément oscillant excité électrostatiquement,
   **caractérisé par**
   une détermination de la déviation ($x(t)$) et/ou de la vitesse de déplacement ($v(t)$) de l'élément oscillant à l'aide du courant d'excitation ($i_1(t)$, $i_2(t)$) qui s'écoule lors de l'excitation électrostatique.

2. Procédé selon la revendication 1, **caractérisé en ce que** l'excitation électrostatique s'effectue au moyen de groupes ($C_1$, $C_2$) de condensateurs disposés des deux côtés de l'élément oscillant dans le plan du déplacement d'oscillation? les tensions d'excitation ($U_1(t)$, $U_2(t)$) appliquées sur les groupes ($C_1$, $C_2$) de condensateurs ayant une configuration particulière.

3. Procédé selon la revendication 2, **caractérisé en ce que** les tensions d'excitation ($U_1(t)$, $U_2(t)$) appliquées sur les deux groupes ($C_1$, $C_2$) de condensateurs possèdent chacune une partie continue ($U_0$) à laquelle est superposée une tension alternative cosinusoïdale ($U_a(t)$) qui présente des signes différents pour les deux groupes ($C_1$, $C_2$) de condensateurs.

4. Procédé selon les revendications 2 ou 3, **caractérisé en ce que** la somme ($i_1(t) + i_2(t)$) des courants d'excitation ($i_1(t)$, $i_2(t)$) qui s'écoulent dans les groupes ($C_1$, $C_2$) de condensateurs est évaluée pour déterminer la déviation ($x(t)$) et/ou la vitesse de déplacement ($v(t)$).

5. Procédé selon la revendication 4, **caractérisé en ce que** la déviation et/ou la vitesse de déplacement de l'élément oscillant est calculée à l'aide de la modification de capacité ($C_1(t)$, $C_2(t)$) des groupes ($c_1$, $C_2$) de condensateurs qui peut être déterminée à l'aide de la somme ($i_1(t) + i_2(t)$) des courants d'excitation ($i_1(t)$, $i_2(t)$).

6. Procédé selon l'une des revendications précédentes, **caractérisé en ce que** l'élément oscillant est excité en un déplacement d'oscillation à sa fréquence de résonance.

7. Procédé selon l'une des revendications précédentes, **caractérisé en ce que** la vitesse de déplacement $v(t)$ et calculé directement à partir de la somme des courants d'excitation ($i_1(t)$, $i_2(t)$), avec

$$\frac{i_1(t) + i_2(t)}{2 \cdot k_c \cdot \hat{U}_a} = -\omega \cdot \hat{x} \cdot \sin(2 \cdot \omega \cdot t + \varphi)$$

et

$$\dot{v}(t) = -\omega \cdot \hat{x} \cdot \sin(\omega \cdot t + \varphi),$$

la somme des courants d'excitation présentant une fréquence double de celle de la vitesse de déplacement de l'élément oscillant.

**8.** Circuit permettant la mise en oeuvre du procédé selon l'une des revendications 1 à 7 et comprenant une sonde (40) de vitesse de rotation présentant au moins un élément oscillant qui peut être excité en un déplacement oscillant, des moyens ($C_1$, $C_2$) permettant d'exciter électrostatiquement l'élément oscillant, **caractérisé par** des moyens (31, 32, 50) de mesure des courants d'excitation ($i_1(t)$, $i_2(t)$) qui s'écoulent lors de l'excitation électrostatique de l'élément oscillant, des moyens de formation de la somme ($i_1(t) + i_2(t)$) des courants d'excitation ($i_1(t)$, $i_2(t)$) ainsi que des moyens (50) de calcul de la vitesse de déplacement ($v(t)$) de l'élément oscillant à l'aide de la somme ($i_1(t) + i_2(t)$) des courants d'excitation ($i_1(t)$, $i_2(t)$).

**9.** Circuit selon la revendication 8, **caractérisé par** des moyens de calcul de la modification de la capacité des moyens ($C_1$, $C_2$) qui amènent l'élément oscillant en oscillation, à l'aide des courants d'excitation ($i_1(t)$, $i_2(t)$) mesurés et des tensions d'excitation ($U_1(t)$, $U_2(t)$), ainsi que par des moyens de calcul de la déviation de l'élément oscillant à l'aide de la modification de capacité.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10237410 A1
- DE 10237411 A1